# EUROPÄISCHE PATENTSCHRIFT

(11) **EP 0 938 941 B1**
(45) Veröffentlichungstag und Bekanntmachung des Hinweises auf die Patenterteilung: **02.07.2003**
(21) Anmeldenummer: 99103074.3
(22) Anmeldetag: 17.02.1999
(51) Int. Cl.: B23B 27/04

(54) **Spanabhebendes Werkzeug**
Chip cutting tool
Outil pour travaux par enlèvement de copaux

(30) Priorität: 26.02.1998 DE 29803344 U
(43) Veröffentlichungstag der Anmeldung: 01.09.1999
(73) Patentinhaber: Holler, Karl-Heinz, 61203 Reichelsheim 1 (DE)
(72) Erfinder: Holler, Karl-Heinz, 61203 Reichelsheim 1 (DE)
(74) Vertreter: Haar, Lucas Heinz Jörn, Dipl.-Ing.

(56) Entgegenhaltungen:
- EP-A- 0 152 729
- WO-A-96/17706
- DE-A- 3 319 799
- DE-U- 9 114 952
- FR-A- 2 353 356
- US-A- 3 894 322

## Beschreibung

Die Erfindung betrifft ein spanabhebendes Werkzeug gemäß dem Oberbegriff des Anspruchs 1. Ein solches Werkzeug ist aus der EP-A-0 059 602 bekannt.

Spanabhebende Werkzeuge der eingangs genannten Art sind auch aus der EP 0 095 062 B2, DE 32 19 150 C3, EP 0 300 544 B1 bekannt. Bei den bekannten Werkzeugen sind die Spannflächen des Schneideinsatzes oder der Backen nach Art eines Dachkantprismas ausgebildet, wobei die jeweiligen Gegenspannflächen mit einer dem Dachkantprisma entsprechenden, im Querschnitt dreieckigen Nut versehen sind. Diese Lagerung des Schneideinsatzes hat den Nachteil, daß Kräfte, die den Schneideinsatz quer zu der durch die Prismenkanten definierten Mittelebene belasten eine der von den Backen ausgeübten Spannkraft entgegenwirkende Reaktionskraft erzeugen, die in Verbindung mit beim Schneidvorgang auftretenden Schwingungen zu einer Lockerung des Schneideinsatzes im Schneidenträger und damit zu einer Beschädigung von Werkstück und Werkzeug führen können.

Der Erfindung liegt die Aufgabe zugrunde, den genannten Nachteil zu beseitigen und ein Werkzeug der eingangs genannten Art zu schaffen, das sich durch eine positionsgenaue, gegenüber Querkräften unempfindliche Halterung des Schneideinsatzes auszeichnet und das einfach und kostengünstig herstellbar ist.

Die Lösung der Aufgabe erfolgt erfindungsgemäß mit den im Anspruch 1 angegebenen Merkmalen. Vorteilhafte Ausführungsformen sind Gegenstand der Unteransprüche.

Bei dem erfindungsgemäßen Werkzeug ist der Schneideinsatz an wenigstens drei Stellen derart an dem Schneidenträger abgestützt, daß auf den Schneideinsatz einwirkende Querkräfte auf den Schneidenträger übertragen werden, ohne daß dabei eine der von den Backen erzeugten Spannkraft entgegenwirkende Kraftkomponente entsteht. Der Schneideinsatz kann daher mit einer verhältnismäßig kleinen Spannkraft ausreichend sicher gehalten werden, wobei die Einwirkung der Spannkraft auf den Schneideinsatz auf der Spanflächenseite des Schneideinsatzes einen vergleichsweise großen Abstand von der Schneide haben kann. Dies ist für die Gestaltung des Schneideinsatzes und seiner Spanleitfläche besonders von Vorteil. Das erfindungsgemäße Werkzeug läßt sich außerdem einfach herstellen. Die Längsnuten im Schneideinsatz von beispielsweise rechteckigem oder trapezförmigem Querschnitt können entweder bereits beim Urformen des Schneideinsatzes gebildet oder aber nachträglich, zum Beispiel durch Schleifen hergestellt werden. Die Vorsprünge im Schneidenträger werden vorzugsweise durch zylindrische Stifte gebildet, die in Bohrungen im Schneidenträger eingepreßt sind. Gemäß einer anderen erfindungsgemäßen Ausgestaltung des Schneidenträgers können die Vorsprünge auch durch vorstehende Rippen gebildet sein, die bei der Bearbeitung der Anlageflächen des Backens und des Anschlags gebildet werden.

Zum Festspannen des Schneideinsatzes in der Ausnehmung kann erfindungsgemäß einer der Backen in bekannter Weise durch einen elastisch verformbaren Abschnitt mit dem Schneidenträger verbunden sein. Zusätzlich können Spannmittel vorgesehen sein, die parallel zu dem elastisch verformbaren Abschnitt an dem Schneidenträger und dem Backen abgestützt sind und im Sinne einer Veränderung des Abstands zwischen den Backen verstellbar sind.

Nach einem weiteren Vorschlag der Erfindung kann auch an dem zweiten Backen eine Spannvorrichtung, zum Beispiel in Form einer Spannschraube oder eines Spannexzenters, angeordnet sein, die in der Spannstellung an dem zweiten Backen und dem Schneideinsatz abgestützt ist. Außerdem kann die Spannfläche des Schneideinsatzes, gegen die die Spannvorrichtung spannbar ist, zur entgegengesetzten Spannfläche eine solche Neigung haben, daß die auf den Schneideinsatz einwirkende Kraft der Spannvorrichtung eine gegen den Anschlag gerichtete Kraftkomponente erzeugt.

Eine besonders einfache Ausgestaltung des erfindungsgemäßen Werkzeugs sieht vor, daß der Schneideinsatz mit Hilfe einer Spannschraube an dem Backen festgespannt ist, der die seitliche Abstützung für den Schneideinsatz aufweist, wobei die Spannschraube durch eine in der Mittelebene verlaufende Bohrung im Schneideinsatz hindurchgesteckt und in eine Gewindebohrung im Schneidenträger eingeschraubt ist. Hierbei kann der der Spanfläche benachbarte Backen des Schneidenträgers entfallen.

Die Erfindung wird nachfolgend anhand von Ausführungsbeispielen näher erläutert, die in der Zeichnung dargestellt sind. Es zeigen
- Figur 1: eine Seitenansicht, teilweise geschnitten, eines Werkzeugs gemäß der Erfindung,
- Figur 2: eine abgewandelte Ausführungsform des Werkzeugs gemäß Figur 1,
- Figur 3: eine weitere abgewandelte Ausführungsform des Werkzeugs gemäß Figur 1,
- Figur 4: einen Querschnitt durch das Werkzeug gemäß Figur 1,
- Figur 5: einen Querschnitt einer Ausführungsform des Werkzeugs gemäß Figur 1 mit prismatischer Spannfläche,
- Figur 6: einen Querschnitt eines erfindungsgemäßen Werkzeugs mit durch eine Rippe gebildeten Vorsprüngen,
- Figur 7: eine Seitenansicht, teilweise geschnitten, eines erfindungsgemäßen Werkzeugs mit einem durch eine Spannschraube befestigten Schneideinsatz,
- Figur 8: eine Seitenansicht eines Werkzeugs mit einem zusätzlich gegen selbsttätiges Lösen gesicherten Schneideinsatz.

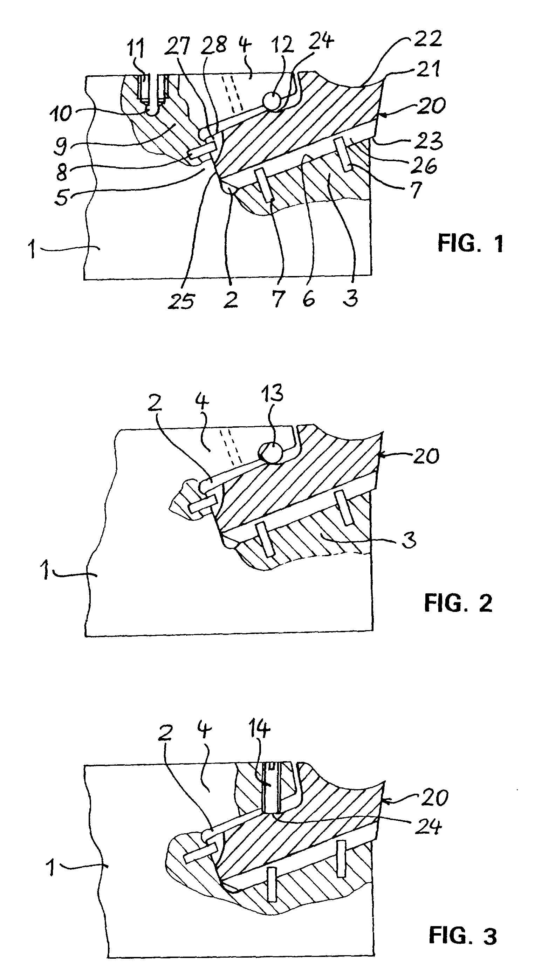

Bei dem in Figur 1 gezeigten, in erster Linie zum Stechen und Anfasen bestimmten Werkzeug weist der aus einer dünnen Platte bestehende Schneidenträger 1 eine zum Plattenrand hin offene Ausnehmungen 2 auf, die an ihren Längsseiten von einem unteren Backen 3 und einem oberen Backen 4 begrenzt ist. Der Boden der Ausnehmung 2 bildet einen Anschlag 5. Der untere Backen 3 weist eine ebene, zur Mittelebene des Schneidenträgers 1 senkrechte Anlagefläche 6 auf, aus der die Enden zweier im Abstand voneinander mittig angeordneter Stifte 7 hervorstehen, die in parallele Bohrungen in dem Backen 3 eingepreßt sind. Der Durchmesser der Stifte 7 beträgt etwa 1/3 bis 1/4 der Dicke des Schneidenträgers 1. Ein weiterer Stift 8 gleicher Größe ist in eine in der Mittelebene des Schneidenträgers 1 liegende Bohrung im Anschlag 5 eingesetzt und ragt mit seinem Ende aus dem Anschlag heraus. Der Backen 4 ist durch einen elastisch verformbaren Abschnitt 9 an den Schneidenträger 1 angeschlossen, der durch einen Schlitz 10 gebildet wird. In der Mitte des Schlitzes 10 ist ferner eine durch den Schlitz in zwei Hälften geteilte Gewindebohrung 11 vorgesehen, in die eine Sicherungsschraube eingedreht werden kann. Die Anlagefläche des Backens 4 wird durch die Mantelfläche eines zylindrischen Stifts 12 gebildet, der senkrecht zur Mittelebene des Schneidenträgers 1 in eine durch die Ausnehmung 2 angeschnittene Bohrung im Backen 4 eingesetzt ist.

In der Ausnehmung 2 befindet sich ein Schneideinsatz 20 mit einer Schneide 21, einer Spanfläche 22, einer unteren Spannfläche 23, einer oberen Spannfläche 24 und einer Anschlagfläche 25. In der Spannfläche 23 ist eine rechteckige Längsnut 26 ausgebildet, deren Breite gleich dem Durchmesser der Stifte 7 ist. Die Maßtoleranzen sind hierbei so gewählt, daß die Stifte 7 spielfrei an den Seitenflächen der Längsnut 26 anliegen, der Schneideinsatz 20 aber noch von Hand gegenüber dem Schneidenträger 1 verschoben werden kann. In der Anschlagfläche 25 weist der Schneideinsatz 20 einen Schlitz 27 mit parallelen Seitenflächen auf, in den das Ende des Stifts 8 spielfrei eingreift, wobei auch hier die vorgenannten Maßtoleranzen angewendet werden.

Durch die Stifte 7, 8 wird der Schneideinsatz 20 nach dem Einsetzen in die Ausnehmung 2 in einer exakt definierten Position zum Schneidenträger 1 ausgerichtet und abgestützt. Die in der Ebene des Schneidenträgers 1 wirksamen Kraftkomponenten der bei einem spanabhebenden Bearbeitungsvorgang auf den Schneideinsatz einwirkenden Kräfte werden über die Spannfläche 23 auf den Backen 3 und über die Anschlagfläche 25 auf den Anschlag 5 übertragen. Quer zur Mittelebene des Schneidenträgers 1 gerichtete Kraftkomponenten werden von den Stiften 7, 8 aufgenommen und auf den Backen 3 bzw. den Anschlag 5 übertragen. Der obere Backen 4 wird beim Einsetzen des Schneideinsatzes 20 in die Ausnehmung 2 durch eine zur unteren Spannfläche 23 geneigte Rampenfläche 28 unter elastischer Verformung so weit angehoben, daß in der in der Zeichnung dargestellten Einbaulage, in der der Stift 12 auf der Spannfläche 24 aufliegt, der Schneideinsatz 20 mit der erforderlichen Spannkraft festgehalten wird. Diese Spannkraft kann geringer sein als bei den bekannten Werkzeugausführungen, da an dem Schneideinsatz keine Kraftkomponenten auftreten, die der Spannkraft entgegenwirken. Die obere Spannfläche 24 ist zudem in einem sich zur Anschlagfläche 25 hin öffnenden Winkel gegenüber der unteren Spannfläche 23 geneigt, so daß der Schneideinsatz 20 durch die Spannkraft des Backens 4 auch gegen ein Herausziehen aus der Ausnehmung 2 gesichert ist. Diese Sicherung kann noch verstärkt werden, indem in die Gewindebohrung 11 eine den Schlitz 10 überbrückende Schraube eingedreht wird. Dies ist vor allem zweckmäßig, bei mit hoher Drehzahl rotierenden Werkzeugen zum Fräsen oder Sägen.

Bei der in Figur 2 gezeigten Abwandlung des Ausführungsbeispiels gemäß Figur 1 ist anstelle des zylindrischen Stifts 12 in einer durch die Ausnehmung 2 angeschnittenen Bohrung des Backens 4 ein Spannexzenter 13 drehbar angeordnet, der aus der in der Zeichnung dargestellten Spannstellung in eine Lösestellung drehbar ist, in der der Schneideinsatz 20 ungehindert aus der Ausnehmung 2 herausgezogen werden kann.

Figur 3 zeigt eine Abwandlung des Ausführungsbeispiels gemäß Figur 1, bei der in einer mittigen Gewindebohrung im oberen Backen 4 eine Spannschraube 14 angeordnet ist, mit der der Schneideinsatz 20 in der Ausnehmung 2 festspannbar ist. Auch hierbei wird der Schneideinsatz 20 durch die Spannschraube 14 gegen Herausziehen aus der Ausnehmung 2 sicher gehalten, indem die Spannschraube 14 gegen eine geneigte Spannfläche 24 drückt. Bei Bedarf kann zur Erhöhung der Sicherheit gegen Herausziehen in der Spannfläche 24 eine Kalotte vorgesehen sein, in die das mit einer Kugelkappe versehene Ende der Spannschraube 14 eingreift.

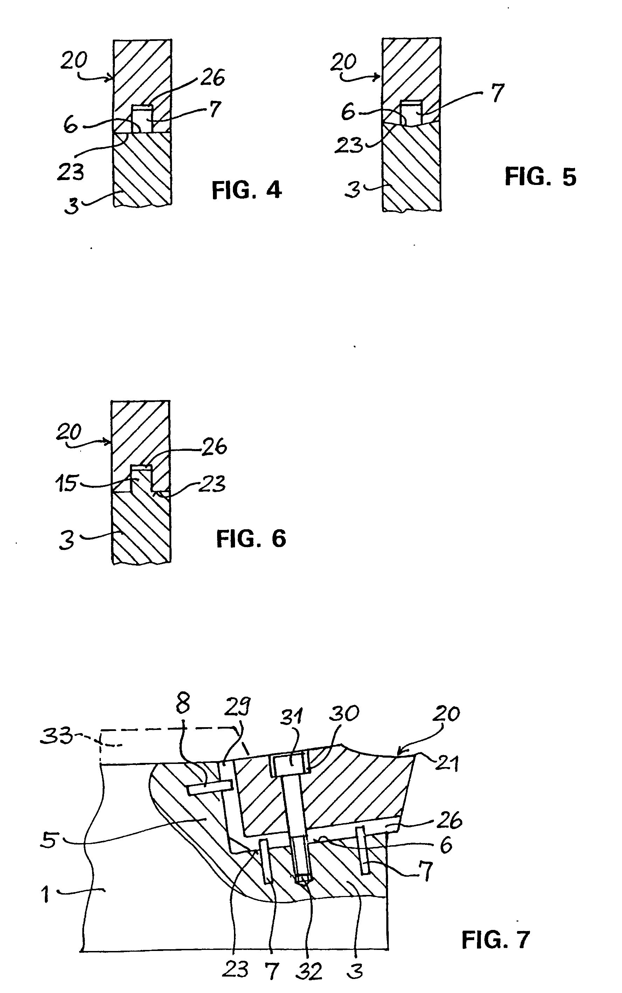

Figur 5 zeigt eine Abwandlung, bei der die untere Spannfläche 23 des Schneideinsatzes 20 die Form eines flachen Dachkantprismas hat, wobei die Anlagefläche 6 des unteren Backens 3 durch zwei entsprechend dem Dachkantprisma geneigte Flächen gebildet ist. Im Vergleich zu der in Figur 4 gezeigten Ausführung mit ebener Anschlagfläche 6 und Spannfläche 23 erfordert diese Abwandlung eine höhere Bearbeitungsgenauigkeit, sie kann jedoch vorteilhaft bei Anwendungen, wie Längsdrehen sein, da die geneigten Flächen die Stifte 7 entlasten.

Bei dem in Figur 6 gezeigten Ausführungsbeispiel weist der untere Backen 3 anstelle von zwei Stiften 7 eine durchgehende Längsrippe 15 auf, die spielfrei in die Längsnut 26 in der Spannfläche 23 des Schneideinsatzes 20 eingreift.

Bei dem in Figur 7 gezeigten Ausführungsbeispiel weist der Schneidenträger 1 nur einen unteren Backen 3 und einen Anschlag 5 auf, die gleichermaßen wie bei dem Ausführungsbeispiel gemäß Figur 1 mit Stiften 7, 8 versehen sind. Der Schneideinsatz 20 ist an den Stiften 7 mit einer Längsnut 26 und an dem Stift 8 mit einer dem Schlitz 27 entsprechenden Nut 29 abgestützt. Zum Festspannen des Schneideinsatzes 20 weist dieser eine in seiner Mittelebene verlaufende, zur unteren Spannfläche 23 senkrechte Durchgangsbohrung 30 auf, in der eine Spannschraube 31 angeordnet ist. Die Spannschraube 31 ist mit ihrem Gewindeende in eine Gewindebohrung 32 in der Anlagefläche 6 des Backens 3 eingeschraubt. Um die Spannschraube 31 bei weit überstehender Schneide 21 von eventuell auftretenden Kippkräften zu entlasten, kann der Schneidenträger 1 auch mit einem festen, den Schneideinsatz 20 übergreifenden Ansatz 33 versehen sein. Diese Ausführungsform ist für Schneidenträger und Schneideinsätze größerer Dicke vorgesehen.

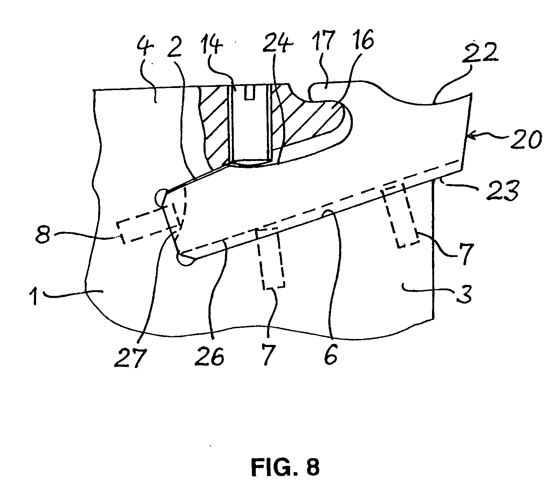

Figur 8 zeigt ein Ausführungsbeispiel eines Werkzeugs, bei dem der Schneideinsatz 20 besonders gegen Herausziehen aus dem Schneidenträger 1 gesichert ist. Der Schneideinsatz 20 ist hierbei wie bei dem Ausführungsbeispiel gemäß Figur 3 in der Ausnehmung 2 an Stiften 7, 8 abgestützt, die in eine Längsnut 26 bzw. einen Schlitz 27 eingreifen. Zum Festspannen des Schneideinsatzes 20 ist in dem oberen Backen 4 eine Spannschraube 14 vorgesehen, die sich mit einer balligen Stirnfläche an der entsprechend gekrümmten oberen Spannfläche 24 abstützt, die zunehmend bis zu einem Winkel von über 30° gegenüber der unteren Spannfläche 23 geneigt ist. Das Ende des Backens 4 ist als Finger 16 ausgebildet, der einen sich auf der der Schneide entgegengesetzten Seite an die Spanfläche 22 anschließenden und sich in Richtung des Backens 4 erstreckenden Ansatz 17 untergreift.

Die Zeichnung zeigt das Werkzeug in der Spannstellung mit gegen die Spannfläche 24 fest angezogener Spannschraube 14. Hierbei liegt der Finger 16 an dem Ansatz 17 an, wodurch ein Teil der an dem Backen 4 abgestützten Reaktionskraft aus der auf die Spannfläche 24 einwirkenden Spannkraft über den Finger 16 und den Ansatz 17 auf den Schneideneinsatz 20 übertragen wird. Durch diese zusätzliche Abstützung wird die Verformung des Backens 4 gegenüber dem Schneidenträger 1 begrenzt und eine deutlich fühlbare Erhöhung des Drehmoments beim Festziehen der Spannschraube 14 erreicht, die den Anwender daraufhin weist, daß ein weiteres Anziehen der Spannschraube 14 nicht mehr erforderlich ist. Da sich der Finger 16 an dem Schneideinsatz 20 abstützt, läßt sich durch ein weiteres Anziehen der Spannschraube 14 die Kraft zum Andrücken des Schneideinsatzes 20 an die Anlagefläche 6 des Backens 3 auch nicht mehr erhöhen. Die Kraft mit der der Schneideinsatz 20 an den Backen 3 angedrückt wird, wird vielmehr durch die von dem Verformungsweg des Backens 4 abhängige Kraft bestimmt, mit der sich die Spannschraube 14 an der Spannfläche 24 abstützt bevor der Finger 16 den Ansatz 17 berührt. Durch das Verspannen des Fingers 16 mit dem Ansatz 17 wird außerdem erreicht, daß der Schneideinsatz 20 bei angezogener Spannschraube 14 an dem Backen 4 formschlüssig verriegelt ist. Der Schneideinsatz 20 kann daher selbst dann nicht aus der Ausnehmung 2 herausgezogen werden, wenn sich zum Beispiel durch Temperatureinflüsse der Schneidenträger derart verformt, daß die Anpreßkraft zwischen dem Schneideinsatz 20 und dem Backen 3 erheblich kleiner oder nahezu Null wird. Die beschriebene Ausgestaltung eignet sich daher insbesondere auch für rotierende Schneidwerkzeuge, die für hohe Umfangsgeschwindigkeiten geeignet sind.

## Patentansprüche

1. Spanabhebendes Werkzeug, insbesondere zum Stechen, Anfasen, Plandrehen, Sägen und Fräsen, mit einem scheibenförmigen Schneidenträger (1), der eine zu seinem Rand hin offene Ausnehmung (2) und einander gegenüberliegende, die Ausnehmung begrenzende Backen (3, 4) aufweist, und mit einem in die Ausnehmung einsetzbaren und zwischen den Backen festspannbaren Schneideinsatz (20), der an seinem vorderen Ende eine Schneide (21) und seinem hinteren Ende eine an einem Anschlag (5) in der Ausnehmung anliegende Anschlagfläche (25) hat und mit einer sich in Längsrichtung der Ausnehmung erstreckenden Spannfläche (23) an einem Backen gelagert ist, **dadurch gekennzeichnet, daß** in der Spannfläche (23) des Schneideinsatzes (20) eine Längsnut (26) mit zur gemeinsamen Mittelebene von Schneideinsatz (20) und Schneidenträger (1) im wesentlichen parallelen Seitenflächen ausgebildet ist, daß der an der Spannfläche (23) anliegende Backen (3) eine aus einem oder mehreren Vorsprüngen (7, 15) gebildete seitliche Abstützung hat, die in die Längsnut (26) eingreift und an wenigstens zwei im Abstand voneinander liegenden Stellen an beiden Seitenflächen der Längsnut (26) anliegt und daß in der Anschlagfläche (25) und/oder einer zweiten dem anderen Backen zugekehrten Spannfläche (24) des Schneideinsatzes (20) eine Ausnehmung (27, 29) mit zu der genannten Mittelebene parallelen Seitenflächen vorgesehen ist, in die ein an dem Anschlag (5) und/oder dem anderen Backen (4) angebrachter Vorsprung (8) spielfrei eingreift.

2. Werkzeug nach Anspruch 1, **dadurch gekennzeichnet, daß** die Vorsprünge im Schneidenträger (1) durch zylindrische Stifte (7, 8) gebildet werden, die in Bohrungen im Schneidenträger (1) eingepreßt sind.

3. Werkzeug nach Anspruch 1, **dadurch gekennzeichnet, daß** die Vorsprünge durch vorstehende Rippen gebildet sind, die bei der Bearbeitung der Anlageflächen (6) des Backens (3) und des Anschlags (5) gebildet werden.

4. Werkzeug nach einem der vorhergehenden Ansprüche, **dadurch gekennzeichnet, daß** einer der Backen (4) durch einen elastisch verformbaren Abschnitt (9) mit dem Schneidenträger (1) verbunden ist.

5. Werkzeug nach einem der vorhergehenden Ansprüche, **dadurch gekennzeichnet, daß** Spannmittel vorgesehen sind, die parallel zu dem elastisch verformbaren Abschnitt (9) an dem Schneidenträger (1) und dem Backen (4) abgestützt sind und im Sinne einer Veränderung des Abstands zwischen den Backen (3, 4) verstellbar sind.

6. Werkzeug nach einem der vorhergehenden Ansprüche, **dadurch gekennzeichnet, daß** an einem Backen (4) eine Spannvorrichtung, insbesondere ein Spannexzenter (13) oder eine Spannschraube (14) angeordnet ist, die in der Spannstellung an dem Backen (4) und dem Schneideinsatz (20) abgestützt ist.

7. Werkzeug nach einem der vorhergehenden Ansprüche, **dadurch gekennzeichnet, daß** die Spannfläche (24) des Schneideinsatzes (20), gegen die die Spannvorrichtung (12, 13, 14) spannbar ist, zur entgegengesetzten Spannfläche (23) eine solche Neigung hat, daß die auf den Schneideinsatz einwirkende Kraft der Spannvorrichtung eine gegen den Anschlag (5) gerichtete Kraftkomponente erzeugt.

8. Werkzeug nach einem der vorhergehenden Ansprüche, **dadurch gekennzeichnet, daß** der Schneideinsatz (20) mit Hilfe einer Spannschraube (31) an dem Backen (3) festgespannt ist, der die seitliche Abstützung für den Schneideinsatz (20) aufweist, wobei die Spannschraube (31) durch eine in der Mittelebene verlaufende Bohrung (30) im Schneideinsatz (20) hindurchgesteckt und in eine Gewindebohrung (32) im Backen (3) eingeschraubt ist.

9. Werkzeug nach Anspruch 6, **dadurch gekennzeichnet, daß** der Backen (4), an dem die Spannvorrichtung abgestützt ist, an seinem Ende eine sich in Richtung der Schneide (21) erstreckenden Finger (16) hat, der einen sich in der entgegengesetzten Richtung erstreckenden Ansatz (17) am Schneideinsatz (20) auf der der Spannfläche (24) zugekehrten Seite untergreift.

## Claims

1. Chipping tool, in particular for piercing, chamfering, facing, sawing and milling, comprising a disc-shaped cutter carrier (1) comprising a recess (2) open at its side and mutually opposing jaws (3, 4) defining the recess, and with a cutting insert (20) which can be inserted into the recess and fixed between the jaws, having at its leading end a cutter (21) and at its trailing end a stop face (25) resting on a stop (5) in the recess and being mounted on one jaw with a clamping surface (23) extending in the longitudinal direction of the recess, **characterised in that** in the clamping surface (23) of the cutting insert (20) a longitudinal groove (26) is formed with side faces substantially parallel to the common centre plane of the cutting insert (20) and cutter carrier (1), **in that** the jaw (3) resting on the clamping surface has a lateral support formed from one or more projections (7, 15) which lateral support engages in the longitudinal groove (26) and rests on at least two mutually spaced points on the two side faces of the longitudinal groove (26) and **in that** in the stop face (25) and/or in a second clamping surface (24) of the cutting insert (20) facing the other jaw a recess (27, 29) with side faces parallel to said centre plane is provided, into which a projection (8) provided on the stop (5) and/or the other jaw (4) engages without play.

2. Tool according to claim 1, **characterised in that** the projections in the cutter carrier (1) are formed by cylindrical pins (7, 8) pressed into holes in the cutter carrier (1).

3. Tool according to claim 1, **characterised in that** the projections are formed by protruding ribs formed during machining of the contact faces (6) of the jaw (3) and the stop (5).

4. Tool according to any one of the preceding claims, **characterised in that** one of the jaws (4) is connected to the cutter carrier (1) by an elastically deformable portion (9).

5. Tool according to any one of the preceding claims, **characterised in that** that clamping means are provided which are supported parallel to the elastically deformable portion (9) on the cutter carrier (1) and the jaw (4) and can be adjusted in accordance with a change in the spacing between the jaws (3, 4).

6. Tool according to any one of the preceding claims, **characterised in that** a clamping device, in particular a clamping eccentric (13) or a clamping screw (14) is arranged on one jaw (4), the clamping device being supported in the clamping position on the jaw (4) and the cutting insert (20).

7. Tool according to any one of the preceding claims, **characterised in that** the clamping surface (24) of the cutting insert (20) can be clamped against the clamping device (12, 13, 14), has an incline to the opposing clamping surface (23) such that the force of the clamping device acting on the cutting insert produces a force component directed against the stop (5).

8. Tool according to any one of the preceding claims, **characterised in that** the cutting insert (20) is fixed with the aid of a clamping screw (31) on the jaw (3) comprising the lateral support for the cutting insert (20), the clamping screw (31) passing through a hole (30) in the cutting insert (20) extending in the centre plane and being screwed into a threaded hole (32) in the jaw (3).

9. Tool according to claim 6, **characterised in that** the jaw (4), on which the clamping device is supported has, at its end, a finger (16) extending in the direction of the cutter (21), the finger engaging behind a shoulder (17), extending in the opposite direction, on the cutting insert (20) on the side facing the clamping surface (24).

## Revendications

1. Outil pour travaux par enlèvement de copeaux, en particulier pour le percement, le biseautage, le surfaçage, le sciage et le fraisage, avec un support de lames (1) en forme de disque qui est muni d'un évidement (2) s'ouvrant vers son bord et de joues (3, 4) se faisant face et limitant l'évidement, et avec un insert de coupe (20) pouvant être logé dans l'évidement et pouvant être serré entre les joues, lequel insert de coupe est muni à son extrémité antérieure d'une lame (21) et à son extrémité postérieure d'une surface de butée (25) adjacente à une butée (5) dans l'évidement et est monté sur une joue avec une surface de serrage (23) s'étendant dans le sens de la longueur de l'évidement, **caractérisé en ce qu'**une rainure longitudinale (26) ayant des surfaces latérales essentiellement parallèles au plan moyen commun de l'insert de coupe (20) et du support de lames (1) est pratiquée dans la surface de serrage (23) de l'insert de coupe (20), **en ce que** la joue (3) adjacente à la surface de serrage (23) est munie d'un appui latéral formé par une ou plusieurs saillies (7, 15) et qui s'engage dans la rainure longitudinale (26) et qui est adjacent en au moins deux points distants les uns des autres aux deux surfaces latérales de la rainure longitudinale (26), et **en ce qu'**il est prévu dans la surface de butée (25) et / ou dans une seconde surface de serrage (24) de l'insert de coupe (20) dirigée vers l'autre joue un évidement (27, 29) ayant des surfaces latérales parallèles au plan moyen cité et dans lequel évidement s'engage sans jeu une saillie (8) placée sur la butée (5) et / ou sur l'autre joue (4).

2. Outil selon la revendication 1, **caractérisé en ce que** les saillies dans le support de lames (1) sont formées par les tenons cylindriques (7, 8) qui sont enfoncés dans les trous pratiqués dans le support de lames (1).

3. Outil selon la revendication 1, **caractérisé en ce que** les saillies sont formées par des nervures saillantes qui sont formées lors de l'usinage des surfaces d'appui (6) de la joue (3) et de la butée (5).

4. Outil selon l'une des revendications précédentes, **caractérisé en ce que** l'une des joues (4) est reliée au support de lames (1) par une section (9) déformable élastiquement.

5. Outil selon l'une des revendications précédentes, **caractérisé en ce que** des moyens de serrage sont prévus qui prennent appui parallèlement à la section (9) déformable élastiquement sur le support de lames (1) et à la joue (4) et qui peuvent être réglés en modifiant la distance entre les joues (3, 4).

6. Outil selon l'une des revendications précédentes, **caractérisé en ce qu'**est disposé sur une joue (4) un dispositif de serrage, notamment un excentrique de serrage (13) ou une vis de serrage (14), qui prend appui en position de serrage sur la joue (4) et sur l'insert de coupe (20).

7. Outil selon l'une des revendications précédentes, **caractérisé en ce que** la surface de serrage (24) de l'insert de coupe (20) contre laquelle le dispositif de serrage (12, 13, 14) peut prendre appui, présente par rapport à la surface de serrage (23) opposée une telle inclinaison que la force qu'exerce le dispositif de serrage sur l'insert de coupe produit une composante de force dirigée contre la butée (5).

8. Outil selon l'une des revendications précédentes, **caractérisé en ce que** l'insert de coupe (20) est fixé à l'aide d'une vis de serrage (31) sur la joue (3) qui présente l'appui latéral pour l'insert de coupe (20), la vis serrage (31) étant introduite dans l'insert de coupe (20) à travers un trou (30) s'étendant dans le plan moyen et vissée dans un trou fileté (32) pratiqué dans la joue (3).

9. Outil selon la revendication 6, **caractérisé en ce que** la joue (4) contre laquelle s'appuie le dispositif de serrage est munie à son extrémité d'un doigt (16) s'étendant en direction de la lame (21) et qui saisit par en dessous le côté dirigé vers la surface de serrage (24) d'un épaulement (17) formé sur l'insert de coupe (20) et s'étendant en direction opposée.
